# EUROPÄISCHE PATENTSCHRIFT

(11) **EP 2 756 380 B1**
(45) Veröffentlichungstag und Bekanntmachung des Hinweises auf die Patenterteilung: **21.11.2018**
(21) Anmeldenummer: 12775130.3
(22) Anmeldetag: 11.09.2012
(51) Int. Cl.: G06F 3/0482, G06F 3/0488, B60K 35/00

(54) **VERFAHREN UND VORRICHTUNG ZUM ANZEIGEN VON INFORMATIONEN UND ZUM BEDIENEN EINES ELEKTRONISCHEN GERÄTS**
METHOD AND DEVICE FOR DISPLAYING INFORMATION AND FOR OPERATING AN ELECTRONIC DEVICE
PROCÉDÉ ET DISPOSITIF D'AFFICHAGE D'INFORMATIONS ET DE COMMANDE D'UN APPAREIL ÉLECTRONIQUE

(30) Priorität: 12.09.2011 DE 102011112823
(43) Veröffentlichungstag der Anmeldung: 23.07.2014
(73) Patentinhaber: Volkswagen Aktiengesellschaft, 38440 Wolfsburg (DE)
(72) Erfinder: KUHN, Mathias, 14129 Berlin (DE); MICHAELIS, Jan, 14193 Berlin (DE); HAHN, Alexander, 38104 Braunschweig (DE)
(86) Internationale Anmeldenummer: PCT/EP2012/003806
(87) Internationale Veröffentlichungsnummer: WO 2013/037476

(56) Entgegenhaltungen:
- EP-A2- 2 166 445
- EP-A2- 2 354 913
- US-A1- 2011 124 376

## Beschreibung

Die vorliegende Erfindung betrifft ein Verfahren zum Anzeigen von Informationen und zum Bedienen eines elektronischen Geräts, insbesondere in einem Kraftfahrzeug. Die vorliegende Erfindung betrifft weiter eine Einrichtung, welche zur Durchführung dieses Verfahrens geeignet ist.

In einem modernen Fahrzeug werden verschiedene Mengen von Information angezeigt und bedient. Die Darstellung von Information erfolgt vielfach dadurch, dass eine Teilmenge einer Gesamtinformation auf einer Anzeigefläche eines elektronischen Geräts und/oder Infotainmentsysteme in dem Fahrzeug angezeigt wird und der Nutzer die Teilmenge bedienen kann.

Um die vielfältigen Informationen flexibel anzeigen zu können, werden z. B. frei programmierbare Displays eingesetzt, die häufig auch die Wiedergabe herkömmlicher mechanischer Instrumente übernehmen. In der DE 10 2006 032 118 A1 ist beispielsweise ein Kombiinstrument für ein Kraftfahrzeug beschrieben, welches ein Display umfasst, mit dem variabel die Geschwindigkeit des Kraftfahrzeugs, die Drehzahl des Motors des Kraftfahrzeugs, die Temperatur des Motors des Kraftfahrzeugs, die Tankfüllung und/oder die Zeit angezeigt werden können. Außerdem ist es möglich, Informationen eines Navigationssystems, eines Telefons, einer Musikanlage, eines Infotainmentsystems und/oder einer Klimaanlage anzuzeigen.

Zusätzlich zu dem Kombiinstrument wird vielfach eine Anzeigevorrichtung oberhalb der Mittelkonsole des Fahrzeugs angeordnet, über welche weitere Informationen angezeigt werden können. Diese Anzeigevorrichtung wird insbesondere als Multifunktionsanzeige und zur Darstellung einer geographischen Karte eines Navigationssystems verwendet. Eine solche Multifunktionsanzeige ist beispielsweise in der DE 199 41 956 A1 beschrieben.

Aus der DE 10 2009 057 081 A1 ist ein Verfahren zum Bereitstellen einer Benutzerschnittstelle bekannt, bei dem Schaltflächen auf einer Anzeigefläche dargestellt werden. Eine solche Schaltfläche dient als Steuerelement einer graphischen Benutzerschnittstelle. Bei dem Verfahren wird eine Eingabegeste auf einer berührungsempfindlichen Oberfläche erfasst, wobei verschiedene Parameter der Berührung detektiert werden. In Abhängigkeit von diesen Parametern wird die graphische Darstellung auf der Anzeigefläche verändert EP 2354913 A2 zeigt eine Methode und ein System für ein Benutzerinterface für den Zugriff auf Multimediaelemente auf einem elektronischen Gerät.

Für die Anzeige von Information in einem Fahrzeug ergeben sich sehr spezielle Anforderungen. Die Informationsaufnahme erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, so dass er für die Informationsaufnahme nur sehr kurzzeitig den Blick vom Fahrgeschehen abwenden muss. Wird die Bedienung der Fahrzeugeinrichtungen von einer Anzeige unterstützt oder geführt, sollte die Anzeige so erfolgen, dass der Fahrer für die Bedienung nur sehr kurz die Anzeige betrachten muss, um die Bedienung durchzuführen.

Die Gesamtinformation wird häufig über eine Mehrzahl unterschiedlicher Anwendungsprogramme (sogenannte "Apps") zur Verfügung gestellt. Dazu gehören einfache Inhalte beispielweise aktuelle Nachrichten, Zeitungsartikel, Bildbearbeitung, Textverarbeitung, Computerspiel und Musikauswahl- und -wiedergabe-Apps, die die effiziente Nutzung von Webapplikationen mittels einer Anzeigefläche eines elektronischen Geräts ermöglichen. Derartige Anzeigeflächen werden mit einer berührungsempfindlichen Oberfläche ausgestattet und wird als sogenannte Touchscreen bezeichnet. Bei einem solchen Touchscreen erfolgt die Bedienung dadurch, dass der Nutzer mit seiner Fingerspitze den Touchscreen berührt.

In einer Musikauswahl- und -wiedergabe-App kann die Gesamtinformation beispielweise eine Liste mit einer Mehrzahl von Listeneinträgen vom Audio- oder Videowiedergabe betreffen. Von der Gesamtliste wird eine Teilmenge der Listeinträge angezeigt. Durch einen Bedienvorgang kann der Nutzer einen Bildlauf (Scrollen) hervorrufen, um andere Listeneinträge zur Anzeige zu bringen. Bei vielen elektronischen Geräts (z.B. einem iPhone der Fa. Apple, Inc.)befindet eine Bedienzeile für Listeinträge an dem unteren Anzeigeflächenrand.

Bei der Verwendung von solchen elektronischen Geräten ergibt sich jedoch der ergonomische Nachteil, dass die Bedien- und Anzeigefläche zu klein ist, eine sichere Bedienung durch den Fahrer während der Fahrt zu erlauben.

Die Erfindung liegt das technische Problem zugrunde, ein Verfahren und eine Einrichtung der eingangs beschriebenen Art zu schaffen, die den genannten Nachteil vermeidet, insbesondere eine einfache Bedienung des elektronischen Geräts während der Fahrt zu ermöglichen.

Gelöst wird dieses technische Problem durch das Verfahren gemäß beigefügtem Anspruch 1 und die Vorrichtung gemäß beigefügtem Anspruch 14. Vorteilhafte Weiterbildungen des erfindungsgemäßen Verfahrens sind Gegenstände der abhängigen Ansprüche.

Die Erfindung betrifft demnach ein Verfahren gemäß dem beigefügten Anspruch 1, bei dem zum Anzeigen von Informationen und zum Bedienen eines elektronischen Geräts (12) in einem Fahrzeug (11)
- auf einer Anzeigefläche mit einer berührungsempfindlichen Oberfläche mehrere Listenelemente angezeigt werden,
- eine Berührung eines Listenelements auf der berührungsempfindlichen Oberfläche mit einem Betätigungsobjekt erfasst wird, woraufhin das Listenelement aktiviert wird, und
- nach der Aktivierung des Listenelements eine erste Wischbewegung des Betätigungsobjekts auf oder in der Nähe der berührungsempfindlichen Oberfläche erfasst wird, und
- mit oder nach der Erfassung der ersten Wischbewegung des Betätigungsobjekts zumindest die nicht aktivierten Listenelement aus der Anzeigefläche hinausgeschoben werden und ein dem aktivierten Listenelement zugeordnetes multimediales Zusatzelement in die Anzeigefläche hineingeschoben wird.

Das multimediale Zusatzelement kann dabei im weitesten Sinne einer Detaildarstellung des aktivierten Listenelements entsprechen. Handelt es sich bei der Liste beispielsweise um eine Liste mit Musiktiteln kann das multimediale Zusatzelement beispielsweise eine Coverdarstellung des ausgewählten Musiktitels sein. Falls die Listeneinträge beispielsweise Schlagzeilen von Nachrichtenmeldungen oder Betreffzeilen von eingehenden Email-Nachrichten sind, kann das multimediale Zusatzelement einen ausführlichen Nachrichtentext darstellen. Bei dem multimedialen Zusatzelement kann es sich ganz allgemein um ein graphisches Zusatzelement, eine textliches Zusatzelement, eine Videoelement oder um Kombinationen derartiger Elemente handeln.

Das erfindungsgemäße Verfahren erlaubt daher einen einfachen Wechsel zwischen einer Listendarstellung von Informationen und einer Detaildarstellung eines einzelnen Listenelements, die auch vom Fahrer eines Kraftfahrzeugs durchgeführt werden kann, ohne dass seine Aufmerksamkeit beim Führen des Fahrzeugs beeinträchtigt wird. Erfindungsgemäß wird ein Listenelement aktiviert und nach Aktivierung des Listenelements bewirkt eine Wischbewegung einen Bildlauf (Scrollen) vorzugsweise der gesamten Liste, zumindest aber der nicht aktivierten Listenelemente, aus der Anzeigefläche heraus, und ein Hineinscrollen einer dem aktivierten Listenelement zugeordneten Detailansicht, die durch das multimediale Zusatzelement repräsentiert wird.

Unter einer berührungsempfindlichen Oberfläche wird einerseits ein im engeren Sinne ein resistiv oder kapazitiv arbeitender berührungsempfindlicher Bildschirm verstanden. Andererseits ist die Erfindung auch bei Oberflächen einer Anzeigefläche anwendbar, die bereits auf die Annäherung eines Betätigungsobjekts beispielsweise über Annährungssensoren reagieren, so dass zur Aktivierung eines Listenelements und zur Erkennung der Wischbewegung keine unmittelbare Berührung der Oberfläche erfolgen muss.

Als Betätigungsobjekt zur Bedienung der berührungsempfindlichen Oberfläche kann beispielsweise ein Touchpad-Stift oder ein Finger des Benutzers verwendet werden.

Gemäß einer bevorzugten Ausführungsform des erfindungsgemäßen Verfahrens wird das Listenelement nicht sofort bei Registrierung einer Berührung aktiviert, sondern erst wenn das Betätigungselement das Listenelement zumindest während eines ersten. Bei Verwendung eines Annäherungssensors wird das Listenelement aktiviert, wenn sich das Betätigungselement währendes Zeitraums T1 auf Höhe des Listenelements in unmittelbarer Nähe oberhalb der Anzeigefläche befindet. Dies reicht aus, damit der Benutzer einen falsch anvisierten Listeneintrag durch kurzes Anheben des Fingers korrigieren kann, ohne dass der Listeneintrag sofort aktiviert wird, was die Bedienung während der Fahrt erleichtert, da das Hauptaugenmerk des Fahrers ja stets auf das Führen des Fahrzeugs gerichtet ist und es ansonsten leicht zur unbeabsichtigten Auswahl eines Listenelements kommen kann.

Gemäß Stand der Technik wird durch Berühren einer Liste auf einem berührungsempfindlichen Bildschirm und sofort anschließenden Wischbewegung üblicherweise ein Bildlauf (Scrollen) innerhalb der Liste ausgelöst. Ein solche - an sich bekannte - Funktionalität ist vorteilhafterweise auch bei dem erfindungsgemäßen Verfahren realisiert. Der Bildlauf innerhalb der Liste wird ausgelöst, wenn einer Berührung innerhalb eines zweiten Zeitraums T2 ein Wischvorgang folgt.

Der Zeitraum T1, der die Aktivierung eines Listenelements auslöst, muss daher größer als der der Zeitraum T2 gewählt werden. Beispielsweise kann der Zeitraum T1 zur Aktivierung eines Listenelements bei 100 oder 200 ms liegen, während der Zeitraum T2 zum Auslösen einer Scrollbewegung bei weniger als 100 ms oder weniger als 50 ms liegt.

Der Wechsel von der Listendarstellung zur Detaildarstellung erfolgt gemäß einer Variante des erfindungsgemäßen Verfahrens dadurch, dass zumindest die nicht aktivierten Listenelement aus der Anzeigefläche hinausgeschoben werden und ein dem aktivierten Listenelement zugeordnetes multimediale Zusatzelement in die Anzeigefläche hineingeschoben wird, wenn die erste Wischbewegung des Betätigungsobjekts zumindest über eine Mindeststrecke S auf der berührungsempfindlichen Oberfläche erfolgt. Man kann beispielsweise vorsehen, dass das multimediale Zusatzelement vor Erreichen der Mindeststrecke S nur teilweise dargestellt wird und die Anzeige wieder zur ursprünglichen Listendarstellung zurückkehrt (beispielsweise in einer Art elastischer Scrollbewgung zurückschnappt), wenn das Betätigungsobjekt vor Erreichen der Mindeststrecke S von der berührungsempfindlichen Oberfläche entfernt wird. Bei Erreichen der Mindeststrecke S kann man dagegen vorsehen, dass die Listendarstellung vollständig von der Anzeigefläche verschwindet und die durch das multimediale Zusatzelement repräsentierte Detailansicht auf der Anzeigefläche einrastet. Somit kann der Benutzer schon während der Einscrollbewegung der Detailansicht seine Auswahl anhand der Zusatzinformation eventuell korrigieren und einfach zu Listenansicht zurückwechseln.

Die Richtung der Wischbewegung kann je nach Lage und Orientierung der Anzeigefläche zum Benutzer softwareseitig festgelegt werden. Beispielsweise kann man auch vorsehen, je nach Richtung der Wischbewegung unterschiedliche multimediale Zusatzelemente einzublenden. Vorzugsweise erfolgt die erste Wischbewegung aber nach unten auf der berührungsempfindliche Oberfläche, um von der Listenansicht in die Detailansicht zu wechseln, so dass die gleiche dem Benutzer geläufige Geste verwendet werden kann, um, bei nicht aktiviertem Listenelement, innerhalb der Liste zu scrollen oder, bei aktiviertem Listenelement, in die Detailansicht zu Wechseln.

Wenn das multimediale Zusatzelement, beispielsweise die Coverdarstellung, bereits dargestellt ist, kann man dieses multimediale Zusatzelement vorteilhaft wieder durch eine Berührung mit dem Betätigungsobjekt, beispielsweise während eines Zeitraums T1, aktivieren und durch eine zweite Wischbewegung des Betätigungsobjekts eine weiteres dem aktivierten Listenelement zugeordnetes multimediales Zusatzelement anzeigen oder zur Listendarstellung zurückkehren kann. Ein weiteres multimediales Zusatzelement kann beispielsweise ein Liedtext oder eine aktuelle Bandinformation sein.

Das Anzeigen des weiteren graphischen Zusatzelements kann beispielsweise durch eine zweite Wischbewegung ausgelöst werden, die in der gleichen Richtung wie die ersten Wischbewegung erfolgt. Eine Rückkehr zur Listendarstellung kann demgegenüber durch eine zweite Wischbewegung ausgelöst werden, die in entgegengesetzter Richtung zur der ersten Wischbewegung erfolgt. Somit können mehrere Detailansichten nach einander ausgewählt werden. Man kann auch vorsehen, dass man nach Erreichen der letzten, einem Listenelement zugeordneten Detailansicht nicht wieder alle Detailansichten zurückgehen muss, um zur Listendartstellung zu gelangen, sondern dass auch eine Wischbewegung in Richtung der ersten Wischbewegung wieder zur Detailansicht führt, wenn keine weiteren Detailansichten mehr vorhanden sind.

Wenn der Benutzer ein Listenelement durch Betätigen der berührungsempfindlichen Oberfläche während eines Zeitraums T1 aktiviert hat, wird die Aktivierung des Listenelements vorzugsweise durch eine veränderte Darstellung des Listenelements angezeigt wird, so dass der Benutzer sofort erkennt, ob die Aktivierung erfolgreich war. Alternativ oder zusätzlich kann auch eine akustische Bestätigung der Aktivierung erfolgen. Die veränderte Darstellung kann beispielsweise durch eine veränderte Farbgebung des Listenelements erfolgen. Gemäß einer bevorzugten Variante des erfindungsgemäßen Verfahrens besteht jedes Listenelement aus mehreren Teilsegmenten und die Aktivierung des Listenelements durch eine veränderte Darstellung wenigstens eines der Teilsegmente angezeigt wird. Dadurch können die wesentlichen Listeninformationen weiterhin angezeigt werden, während die Aktivierung des Listenelements auch aus dem Blickwinkel des Fahrers erkennbar wird, ohne dass er seine volle Aufmerksamkeit auf die Anzeigefläche richten muss. Beispielsweise kann eines der Teilsegmente einer verkleinerten Darstellung des den Listenelementen zugeordneten multimedialen Zusatzelementen entsprechen, wobei die Teilsegmente der nicht aktivierten Listenelement nur teilweise angezeigt werden und das Teilsegment des aktivierten Listenelements vollständig angezeigt wird.

Bevorzugt kann man zusätzlich zu den zusätzlich zu den Listenelementen und den multimedialen Zusatzelementen zusätzliche Bedienelemente anzeigen, denen durch das Betätigungselement aktivierbare Schaltflächen auf der berührungsempfindlichen Oberfläche zugeordnet sind. Bei einer Musikabspielapplikation kann es sich bei den zusätzlichen Bedienelemente beispielsweise um Start/Stop-Schaltflächen, Vor- und Rücksprung-Schaltflächen und/oder Vor- und Rückspul-Schaltflächen handeln. Vorzugsweise werden die Bedienelemente in der Listendarstellung oberhalb der Listenelemente angezeigt. In der Detailansicht werden die Bedienelement vorzugsweise unterhalb des multimedialen Zusatzelements angezeigt. Bei dieser Variante werden die Bedienelemente als zusammen mit der Listendarstellung und der Detailansicht ein- und ausgescrollt.

Man kann ferner vorsehen, dass das aktivierte Listenelement auch in der Detailansicht als Listenelement angezeigt bleibt, so dass die Detailansicht in einer Variante des erfindungsgemäßen Verfahrens das multimediale Zusatzelement, das Listenelement sowie weitere Bedienelemente umfasst. Damit ist bei einer Musikabspielapplikation beispielsweise gewährleistet, dass neben dem Cover auch die Textinforation wie Interpret und Titel angezeigt bleibt.

Die Erfindung betrifft auch eine Vorrichtung gemäß des beigefügten unabhängigen Vorrichtungsanspruchs 14 zum Anzeigen von Informationen und zum Bedienen eines elektronischen Geräts in einem Fahrzeug mit einer Anzeigevorrichtung mit einer Anzeigefläche, einer berührungsempfindlichen Oberfläche, die auf der Anzeigefläche ausgebildet ist, und einer Steuervorrichtung, die mit der Anzeigevorrichtung und der berührungsempfindlichen Oberfläche einerseits und dem zu bedienenden elektronischen Gerät in dem Fahrzeug andererseits gekoppelt ist. Die Steuervorrichtung ist dabei, beispielsweise durch Laden einer entsprechend programmierten Applikationssoftware zur Durchführung des oben beschriebenen erfindungsgemäßen Verfahrens ausgelegt.

Das mit der erfindungsgemäßen Vorrichtung bedienende elektronische Gerät ist vorzugsweise ein Infotainmentsystem oder speziell die Audioanlage eines Fahrzeugs, beispielsweise eines Kraftfahrzeugs.

Die erfindungsgemäße Vorrichtung kann dabei ein integrierter Bestandteil Teil des Infotainmentsystems des Fahrzeugs sein und beispielsweise über einen zu dem Infotainmentsystem gehörenden berührungsempfindlichen Bildschirm bedient werden. Alternativ kann die erfindungsgemäße Vorrichtung aber auch ein mit dem Infotainmentsystem des Fahrzeugs kommunizierendes Mobilgerät, insbesondere ein Mobiltelefon, ein Smartphone, oder ein Personal Digital Assistant (PDA) sein.

Die Erfindung wird nun anhand von Ausführungsbeispielen mit Bezug zu den Zeichnungen erläutert.
- Figur 1: zeigt das Cockpit eines Fahrzeugs, das mit zwei Varianten einer Vorrichtung zum Anzeigen von Informationen und zum Bedienen eines elektronischen Geräts gemäß einem Ausführungsbeispiel der Erfindung ausgestattet ist,
- Figur 2: zeigt schematisch den Aufbau einer Vorrichtung zum Anzeigen von Informationen und zum Bedienen eines elektronischen Geräts gemäß einem Ausführungsbeispiel der Erfindung,
- Figur 3: zeigt schematisch eine Listendarstellung von Informationen auf einem berührungsempfindlichen Bildschirm einer erfindungsgemäßen Vorrichtung zum Anzeigen von Informationen und zum Bedienen eines elektronischen Geräts,
- die Figuren 4 - 6: illustrieren das erfindungsgemäße Verfahren und die erfindungsgemäße Vorrichtung zum Anzeigen von Informationen und zum Bedienen eines elektronischen Geräts anhand des Wechsel zwischen einer Listendarstellung von Musikstücken und einer Coverdarstellung eines ausgewählten Musikstücks in einer Musikabspielapplikation eines Infotainmentsystems für eine Kraftfahrzeug.

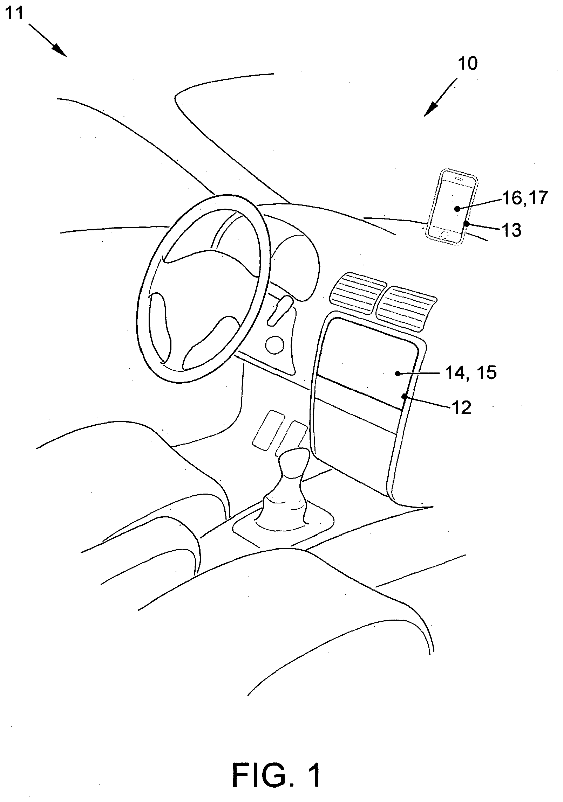

Figur 1 zeigt das Cockpit 10 eines Fahrzeugs 11, das mit zwei 12, 13 Varianten einer erfindungsgemäßen Vorrichtung zum Anzeigen von Informationen und zum Bedienen eines elektronischen Geräts gemäß einem Ausführungsbeispiel der Erfindung ausgestattet ist.

Gemäß einer ersten Variante ist die erfindungsgemäße Vorrichtung in ein Infotainmentsystem 12 des Fahrzeugs 11 intergiert. Das Infotainmentsystem 12 umfasst dazu ein als Anzeigefläche dienendes Display 14 insbesondere zur grafischen Darstellung graphischer Listen, Bildern und anderen Multimediaobjekten. Bei dem Display 14 kann es sich um ein beliebiges nach dem Stand der Technik bekanntes und für diesen Zweck geeignetes Display handeln, welches an einer zentralen Position im Cockpit, z.B. im oberen Bereich der Mittelkonsole, angeordnet ist. Das Display 14 ist vorzugsweise mit einer berührungsempfindlichen Oberfläche 15 ausgestattet, über welche verschiedene Bediengesten des Nutzers, die beispielsweise über mit einem Touchpad-Stift oder einer Finger ausgeführt werden, erfassbar sind. Anstelle der berührungsempfindlichen Oberfläche 14 können auch andere Eingabemittel vorgesehen sein, die in der Lage sind, Bediengesten des Nutzers zu erfassen, beispielsweise (nicht dargestellte) Näherungsensoren, die Bewegungen eines Stiftes oder eines Fingers erfassen können, ohne dass dieser die Oberfläche des Displays 14 tatsächlich berühren muss.

Alternativ kann das Infotainmentsystem aber auch mit einem herkömmliche Smartphone 13 bedient werden. Das Smartphone 13 weist in an sich bekannter Weise ein Display 16 mit einer berührungsempfindlichen Oberfläche 17 auf, über die Bediengesten des Nutzers erfasst werden können. Das erfindungsgemäße Verfahren kann in einem ladbaren Applikationsprogramm (einer sog. "App") in dem Smartphone gespeichert sein. Über eine Datenverbindung werden Informationen und Steuerdaten zwischen dem Infotainmentsystem 12 des Fahrzeugs 11 und dem Smartphone 13 ausgetauscht. Dazu kann das Infotainmentsystem 12 beispielsweise eine (nicht dargestellte) Dockingstation für das Smartphone 13 umfassen. Alternativ kann der Datenaustausch auch über eine USB-Verbindung oder drahtlos über eine Bluetooth-Verbindung erfolgen.

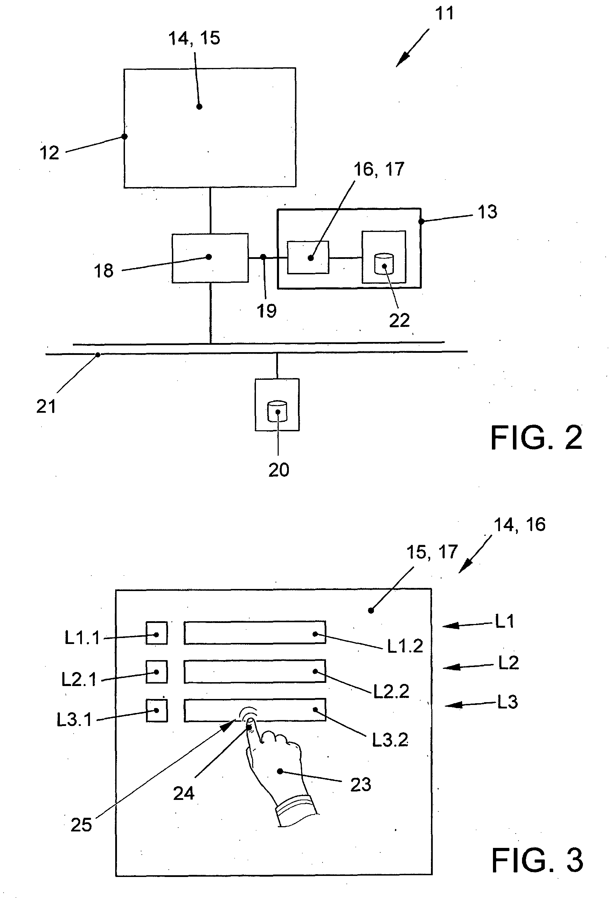

In Figur 2 ist schematisch der Aufbau der erfindungsgemäßen Vorrichtung zum Anzeigen von Informationen und zum Bedienen eines elektronischen Geräts gemäß der beiden in Fig. 1 gezeigten Varianten der Erfindung dargestellt.

Das Infotainmentsystem 12 des Fahrzeugs 11 wird entweder über die berührempfindliche Oberfläche 15 des Displays 14 des Infotainmentsystems 12 selbst oder über die berührempfindliche Oberfläche 17 des Displays 16 des Smartphones 13 gesteuert. Dazu umfasst das Infotainmentsystem 12 und oder das Smartphone 13 eine Steuereinheit 18, die mit dem Display 14, 16 verbunden. Im Fall des Smartphones 13 kann die Datenverbindung 19 auch eine drahtlose Datenverbindung sein. Bei Verwendung eines Smartphones.kann die Steuereinheit 18 auch auf das Smartphone und das Infotainmentsystem verteilt ausgebildet sein.

Die Daten, beispielsweise eine Musikdatenbank, aus den die auf den Displays 14, 16 dargestellten Informationen generiert werden, können in einem Datenspeicher 20 des Infotainment 12 gespeichert sein, auf den beispielsweise über einen Datenbus 21 des Fahrzeugs 11 zugegriffen werden kann. Alternativ oder zusätzlich können die Daten auch in einem internen Speicher 22 des Smartphones 13 gespeichert sein.

Die graphischen Listen werden aus Datenbeständen 20, 22 dadurch erzeugt, dass die Datenbeständen oder eine Teilmenge davon nach einem oder mehreren Sortierkriterien hierarchisch sortiert werden und als graphische Liste dargestellt werden. Dabei kann es sich beispielsweise um eine Musiksammlung, aktuelle Nachrichten, Emails, eine Zieladressenkartei, eine Personenkartei oder ein Telefonbuch handeln.

Figur 3 zeigt schematisch eine Listendarstellung von Informationen auf dem Display 14, 16 mit der berührungsempfindlichen Oberfläche 15, 17 der erfindungsgemäßen Vorrichtung zum Anzeigen von Informationen und zum Bedienen eines elektronischen Geräts.

Im dargestellten Beispiel bestehen die Listenelemente L1, L2, L3 jeweils aus Teilelementen L1.1, L1.2, L2.1, L2.2, L3.1, L3.2 je in Abhängigkeit der Aktivierung eines Listeneintrags unterschiedlich dargestellt werden können. Schematisch ist ferner die Hand 23 eines Nutzers dargestellt, der mit seinem Finger 23 die berührungsempfindliche Oberfläche 15, 17 an einem Berührpunkt 24 auf Höhe des Listenelements L3 berührt, um das Listenelement zu aktivieren.

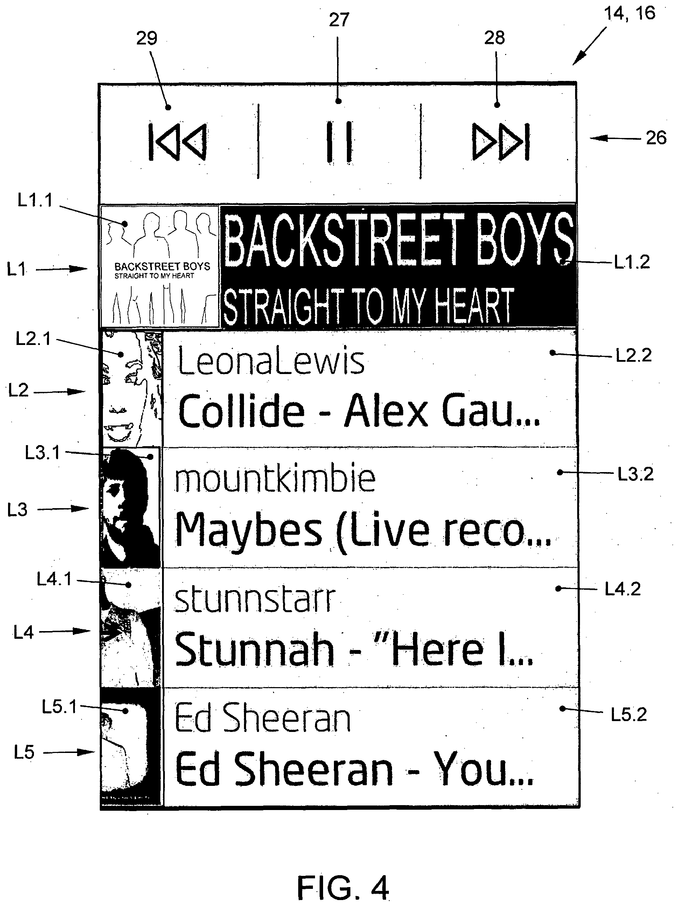

Die Figuren 4 - 6 illustrieren das erfindungsgemäße Verfahren und die erfindungsgemäße Vorrichtung zum Anzeigen von Informationen und zum Bedienen eines elektronischen Geräts anhand des Wechsel zwischen einer Listendarstellung von Musikstücken und einer Coverdarstellung eines ausgewählten Musikstücks in einer Musikabspielapplikation eines Infotainmentsytems für eine Kraftfahrzeug.

In Figur 4 ist einer Musikauswahl- und -wiedergabe-App mit einer Listendarstellung von Musiktiteln L1, L2, L3, L4, L5 mit einer Bedienzeile 26, die sich an dem oberen Bereich der Anzeige 14, 16 befindet, dargestellt. Die Bedienzeile 26 beinhaltet wichtige Steuerelemente wie z.B. "Abspielen"/ "Pause" 27, "Nächsten Titel Abspielen" 28 und "Vorherige Titel abspielen" 29, aber auch andere Bedienelemente sind erfindungsgemäß nicht ausgeschlossen. In dem ausgeführten Beispiel wechselt das "Abspielen"-Steuerelement dem dargestellten, "Pause"-Steuerelement 27, wenn gerade ein Musiktitel abgespielt wird. Die Anzahl der Bedienelemente ist vorzugsweise auf eine geringe Anzahl (z. B ein bis fünf Steuerelemente) begrenzt, um eine Bedienung durch den Fahrer auch während der Fahrt zuverlässig zu ermöglichen.

Vorzugsweise beinhalte eine Listendarstellung eine Liste von mehreren Musiktiteln L1, L2, L3, L4, L5, wobei jedem Musiktitel ein CD-Cover zugeordnet ist (dargestellt anhand des CD-Covers C1, das dem ersten Listeneintrag zugeordnet ist) und textliche Informationen zugeordnet sind.

In der dargestellten Ausführungsform ist jedes Listenelement zweiteilig aufgebaut und umfasst ein erstes Teilelement L1.1, L2.1, L3.1, L4.1, L5.1 und ein zweites Teilelement L1.2, L2.2, L3.2, L4.2, L5.2, die jeweils unabhängig voneinander in ihrer Darstellung verändert werden können. Im dargestellten Beispiel sind die Teilelemente L1.1, L2.1, L3.1, L4.1, L5.1 verkleinerten Darstellungen des CD-Covers zugeordnet, also beispielsweise im Fall des Elements L1.1 dem CD-Cover C1. Die Teilelemente L1.2, L2.2, L3.2, L4.2, L5.2 zeigen jeweils textliche Information, wie Interpret und Titel an.

In einer besonderen Ausführungsform ist erfindungsgemäß vorgesehen, dass bei einer Auswahl eines Listenelements L1 die ausgewählte Listendarstellung verändert wird. Eine Veränderung des ausgewählten Listenelements erfolgt hier durch eine Veränderung der Hintergrundfarbe und/oder der Schriftfarbe des Teilelements L1.2 und/oder einer Veränderung eines CD-Cover-Bildes L1.1. Eine Veränderung des CD-Cover-Bildes kann insbesondere derart erfolgen, dass das CD-Cover Bild größer und/oder vollständiger dargestellt wird. In Fig.4 ist dargestellt, dass der Musiktitel L1 ausgewählt worden ist. Dabei ist im Teilelement L1.1das CD-Coverbild C1 als vollständiges Bild dargestellt. Für die nicht ausgewählten Musiktitel L2, L3, L4, L5 ist das jeweilige CD-Cover-Bild L2.1, L3.1, L4.1, L5.1 nur zur Hälfte dargestellt. Wird beispielsweise Musiktitel neu ausgewählt, wird das neu gewählte CD-Cover-Bild als vollständiges Bild dargestellt. Die Veränderung des CD-Cover-Bildes ist vorteilhaft, da ein ausgewählter Musiktitel sofort erkennbar ist und bei nicht ausgewählten Musiktiteln der Bereich für die textliche Information vergrößert ist. Durch diese vereinfachte Wahrnehmungsmöglichkeit wird die Ablenkung des Fahrers bei der Bedienung vermindert, so dass eine Bedienung während der Fahrt möglich ist.

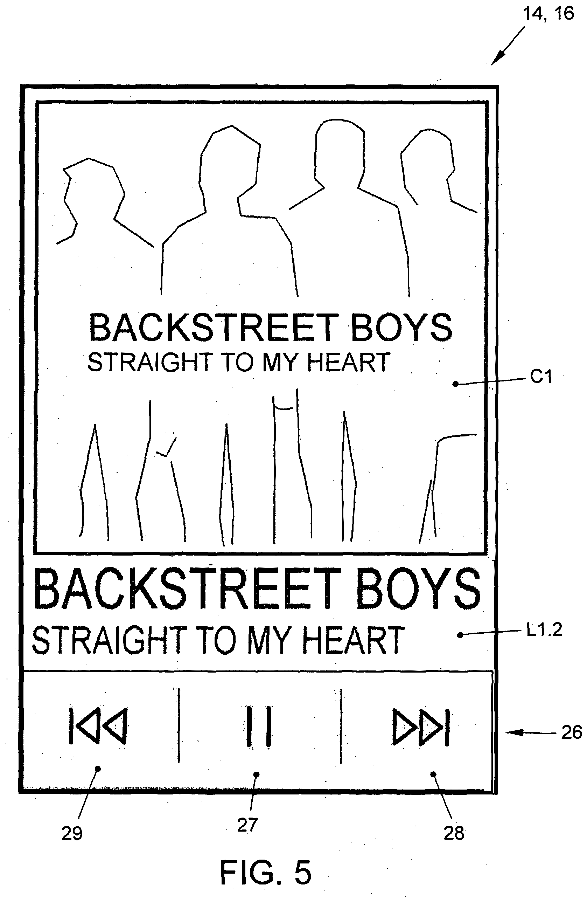

Weiterhin in Figur 5 ist ein CD-Cover-Bild C1, welches dem aktuell ausgewählten Musiktitel L1 zugeordnet ist, in einer Detailansicht darstellt. Zusätzlich ist die dem Musiktitel zugeordnete textliche Information dargestellt, die beispielsweise dem Teilelement L1.2 entsprechen kann. Am unteren Ende der Anzeigefläche ist die Bedienzeile 26 dargestellt. Vorteilhaft an dieser Darstellung ist die klare Darstellung und einfache Bedienbarkeit, so dass eine Bedienung durch den Fahrer während der Fahrt möglich ist.

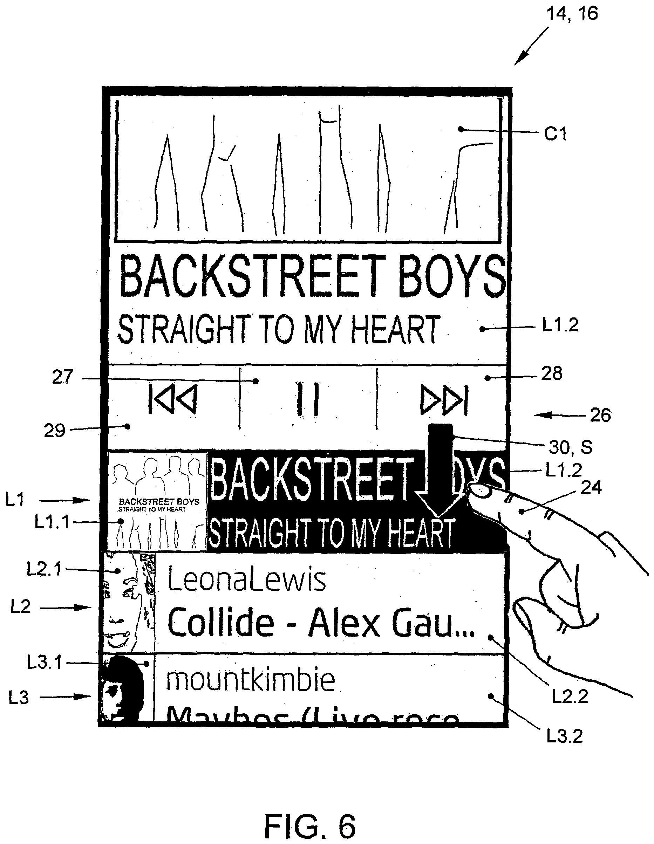

Figur 6 zeigt einen Wechselvorgang von der Listendarstellung entsprechend Fig. 4 zur Detailansicht entsprechend Fig. 5 durch einen Bedienvorgang des Nutzers.

Ausgehend von der Listendarstellung entsprechend Fig. 4 umfasst der Bedienvorgang folgende Bedienschritte:
- Starten des Umschaltvorgangs durch Berührung mit dem Finger 24 an der Stelle 25 des Titels L1, wobei der Finger zumindest eine Zeiteinheit T1 an der Stelle gehalten wird,
- Wischen des Fingers 24 nach unten in Richtung des Pfeils 30, wobei sich der Finger zumindest eine Strecke S, derart an der berührempfindlichen Oberfläche des Displays 14, 16 bewegt, dass die Bewegung erfasst werden kann,
- Entfernen des Fingers 24 vom Display 14, 16.

Beim Wischen bewegt sich die Listendarstellung L1, L2, L3, ... mit dem oben angeordneten Bedienfeld 26 nach unten. Von oben folgt die textliche Information L.1.2 und Detailansicht C1, so dass das Bedienfeld 26 sich zwischen der Listendarstellung und Detailansicht befindet. Sobald der Bedienvorgang vom Gerät erkannt wurde, erfolgt der Wechsel von der Listendarstellung in die Detailansicht. Die Listendarstellung scrollt nach unten weg, von oben scrollt die Detailansicht ein. Dabei scrollt das Bedienfeld nach unten, wobei es zwischen der Listendarstellung und Detailansicht bleibt. Sobald das Bedienfeld das untere Ende der Anzeige erreicht, ist der Scrollvorgang beendet..Das Bedienfeld "rastet" an dieser Stelle ein und bleibt stehen. Der Wechselvorgang von der Listendarstellung in die Detailansicht ist beendet.

Die Zeiteinheit T1 ist erfindungsgemäß länger als eine Zeiteinheit T2. Eine Zeiteinheit T2 entspricht der Zeiteinheit, die entsprechend dem Stand der Technik ein Scrollen innerhalb einer Liste durch ein Wischen.

Ein Wechsel von der Detailansicht gemäß Figur 5 in die Listendarstellung gemäß Figur 4 erfolgt entsprechend umgekehrt durch eine Berührung der Detailansicht und ein Wischen nach oben. Sobald das Bedienfeld das obere Ende der Anzeige erreicht hat, ist der Scrollvorgang beendet. Das Bedienfeld "rastet" an dieser Stelle ein und bleibt stehen. Der Wechselvorgang von der Detailansicht in die Listendarstellung ist beendet.

In einer weiteren Ausführung wird dieser vertikale Wechsel von Ansichten durch zumindest eine weitere Ansicht erweitert. Dabei ist 'es nicht notwendig, dass die zumindest eine weitere Ansicht das Bedienfeld 26 aufweist. Ein Wechsel von der Detailansicht zu der zumindest einen weiteren Ansicht erfolgt durch eine Berührung der Detailansicht C1, wobei der Finger zumindest die Zeiteinheit T1 an der Stelle gehalten wird, und ein Wischen nach unten: Wenn die zumindest eine weitere Ansicht kein Bedienfeld 26 aufweist, dann endet der Wechselprozess, wenn die zumindest eine weitere Ansicht vollständig in den Anzeigebereich eingescrollt ist.

Ein Wechsel von der Listendarstellung zu der zumindest einen weiteren Ansicht erfolgt durch eine Berührung der Detailansicht, wobei der Finger zumindest die Zeiteinheit T1 an der Stelle gehalten wird, und ein Wischen nach oben.

Erfindungsgemäß können entsprechend weitere Ansichten ergänzt werden, so dass ein Wechsel der Ansichten durch die oben beschriebenen Verfahren zyklisch möglich ist.

In einer weiteren Ausführungsform der Erfindung ist die zumindest eine weitere Ansicht eine Anzeige und Bedienelement für eine Sprachaufnahme für Sprachnotizen, Gespräche oder Aufnahme von Musik.

Erfindungsgemäß ist die erfindungsgemäße Vorrichtung ein mobiles Gerät, beispielsweise ein Mobiltelefon, Smartphone, PDA, aber auch andere mobile Geräte mit Touchscreen können verwendet werden. Es ist auch vorgesehen, dass das elektronische Gerät eine Infotainmentsystem in einem Kraftfahrzeug darstellt. Das elektronische Gerät ist erfindungsgemäß dazu ausgelegt, das oben beschriebene Verfahren auszuführen.

### BEZUGSZEICHENLISTE

- 10: Cockpit
- 11: Fahrzeug
- 12: Infotainmentsystem
- 13: Smartphone
- 14: Display des Infotainmentsystems 12
- 15: berührungsempfindliche Oberfläche des Displays 14
- 16: Display des Smartphones 13
- 17: berührungsempfindliche Oberfläche des Displays 16
- 18: Steuereinheit
- 19: Datenverbindung
- 20: Speicher des Fahrzeugs 11
- 21: Datenbus
- 22: Speicher des Smartphones 13
- 23: Hand
- 24: Finger
- 25: Berührpunkt
- 26: Bedienzeile
- 27: Abspiele/Pause-Feld
- 28: Nächster Titel-Feld
- 29: Vorheriger Titel-Feld
- 30: Pfeil

- C1: multimediales Zusatzelement
- L1 - L5: Listenelemente
- L1.1 - L5.1: Teilsegmente
- L1.2 - L5.2: Teilsegemente

## Patentansprüche

1. Verfahren, bei dem zum Anzeigen von Informationen und zum Bedienen eines elektronischen Geräts (12) in einem Fahrzeug (11)
- auf einer Anzeigefläche (14, 16) mit einer berührungsempfindlichen Oberfläche (15, 17) mehrere Listenelemente (L1, L2, L3, L4, L5) angezeigt werden,
- eine Berührung eines Listenelements (L1) auf der berührungsempfindlichen Oberfläche (15, 17) mit einem Betätigungsobjekt (24) oder eine Annäherung eines Betätigungsobjekts (24) an das Listenelement (L1) erfasst wird, woraufhin das Listenelement (L1) aktiviert wird, und
- nach der Aktivierung des Listenelements (L1) eine erste Wischbewegung des Betätigungsobjekts (24) auf oder in der Nähe der berührungsempfindlichen Oberfläche (15, 17) erfasst wird, und
- mit oder nach der Erfassung der ersten Wischbewegung des Betätigungsobjekts (24) zumindest die nicht aktivierten Listenelement (L2, L3, L4, L5) aus der Anzeigefläche (14, 16) hinausgeschoben werden und ein dem aktivierten Listenelement (L1) zugeordnetes multimediales Zusatzelement (C1) in die Anzeigefläche hineingeschoben wird.

2. Verfahren nach Anspruch 1, wobei das Listenelement (L1) aktiviert wird, wenn das Betätigungselement (24) das Listenelement (L1) zumindest während eines ersten Zeitraums T1 berührt oder sich auf Höhe des Listenelements (L1) in unmittelbarer Nähe oberhalb der Anzeigefläche (14, 16) befindet.

3. Verfahren nach einem der Ansprüche 1 oder 2, wobei zumindest die nicht aktivierten Listenelement (L2, L3, L4, L5) aus der Anzeigefläche (14, 16) hinausgeschoben werden und ein dem aktivierten Listenelement (L1) zugeordnetes multimediale Zusatzelement (C1) in die Anzeigefläche hineingeschoben wird, wenn die erste Wischbewegung des Betätigungsobjekts (24) zumindest über eine Mindeststrecke S auf der berührungsempfindlichen Oberfläche (15, 17) erfolgt.

4. Verfahren nach Anspruch 3, wobei die erste Wischbewegung nach unten auf der berührungsempfindliche Oberfläche (15, 17) erfolgt.

5. Verfahren nach einem der vorhergehenden Ansprüche, man das multimediale Zusatzelement (C1) durch eine Berührung mit dem Betätigungsobjekt (24) aktivieren kann und durch eine zweite Wischbewegung des Betätigungsobjekts (24) eine weiteres dem aktivierten Listenelement (L1) zugeordnetes multimediales Zusatzelement anzeigen oder zur Listendarstellung zurückkehren kann.

6. Verfahren nach Anspruch 5, wobei das Anzeigen des weiteren multimedialen Zusatzelements durch eine zweite Wischbewegung in Richtung der ersten Wischbewegung erfolgt.

7. Verfahren nach Anspruch 5, wobei die Rückkehr zur Listendarstellung durch eine zweite Wischbewegung in entgegengesetzter Richtung zur der ersten Wischbewegung erfolgt.

8. Verfahren nach einem der vorhergehenden Ansprüche, wobei die Aktivierung des Listenelements (L1) durch eine veränderte Darstellung des Listenelements (L1) angezeigt wird.

9. Verfahren nach Anspruch 8, wobei jedes Listenelement (L1, L2, L3, L4, L5) aus mehreren Teilsegmenten (L1.1, L1.2, L2.1, L2.2, L3.1, L3,2, L4.1, L4.2, L5.1, L5.2) besteht und die Aktivierung des Listenelements (L1) durch eine veränderte Darstellung wenigstens eines der Teilsegmente (L1.1, L1.2) angezeigt wird.

10. Verfahren nach Anspruch 9, wobei eines der Teilsegmente (L1.1, L2.1, L3.1, L4.1, L5.1) einer verkleinerten Darstellung des den Listenelementen (L1, L2, L3, L4, L5) zugeordneten multimedialen Zusatzelementen (C1, C2, C3, C4, C5) entspricht, wobei die Teilsegmehte (L2.1, L3.1, L4.1, L5.1) der nicht aktivierten Listenelement (L2, L3, L4, L5) nur teilweise angezeigt werden und das Teilsegment (L1.1) des aktivierten Listenelements (L1) vollständig angezeigt wird.

11. Verfahren nach einem der vorhergehenden Ansprüche, wobei man zusätzliche Bedienelemente (26, 27, 28, 29) anzeigt, denen durch die Betätigungselemente aktivierbare Schaltflächen auf der berührungsempfindlichen Oberfläche (15, 17) zugeordnet sind.

12. Verfahren nach Anspruch 11, wobei die Bedienelemente (26, 27, 28, 29) oberhalb der Listenelemente (L1, L2, L3, L4, L5) angezeigt werden.

13. Verfahren nach Anspruch 11, wobei die Bedienelemente (26, 27, 28, 29) unterhalb des multimedialen Zusatzelements (C1) angezeigt werden.

14. Vorrichtung zum Anzeigen von Informationen und zum Bedienen eines elektronischen Geräts in einem Fahrzeug mit
- einer Anzeigevorrichtung mit einer Anzeigefläche (14, 16),
- einer berührungsempfindlichen Oberfläche (15, 17), die auf der Anzeigefläche (14, 16) ausgebildet ist, und
- einer Steuervorrichtung (18), die mit der Anzeigevorrichtung und der berührungsempfindlichen Oberfläche (15, 17) einerseits und dem zu bedienenden elektronischen Gerät in dem Fahrzeug (12) andererseits gekoppelt ist, wobei die Steuervorrichtung (18) zur Durchführung des Verfahrens nach einem der Ansprüche 1 bis 13 ausgelegt ist.

15. Vorrichtung nach Anspruch 14, wobei das zu bedienende elektronische Gerät ein Infotainmentsystem (12) eines Fahrzeugs ist, wobei die Vorrichtung vorzugsweise ein integrierter Teil des Infotainmentsystems (12) des Fahrzeugs oder ein mit dem Infotainmentsystem (12) des Fahrzeugs kommunizierendes Mobilgerät (13), insbesondere ein Mobiltelefon, ein Smartphone, oder PDA ist.

## Claims

1. Method wherein, for displaying information and operating an electronic device (12) in a vehicle (11),
- a plurality of list elements (L1, L2, L3, L4, L5) are displayed on a display area (14, 16) with a touch-sensitive surface (15, 17),
- a contact of a list element (L1) on the touch-sensiti- 1 -ve surface (15, 17) with an actuating object (24) or an approach of an actuating object (24) to the list element (L1) is detected, whereupon the list element (L1) is activated, and
- after the activation of the list element (L1), a first swiping movement of the actuating object (24) on or in the vicinity of the touch-sensitive surface (15, 17) is detected, and
- on or after the detection of the first swiping movement of the actuating object (24) at least the non-activated list elements (L2, L3, L4, L5) are pushed out of the display area (14, 16) and an additional multimedia element (C1) allocated to the activated list element (L1) is pushed into the display area.

2. Method according to Claim 1, wherein the list element (L1) is activated when the actuating element (24) touches the list element (L1) at least during a first period T1 or is located at the level of the list element (L1) in the immediate vicinity above the display area (14, 16).

3. Method according to one of Claims 1 or 2, wherein at least the non-activated list elements (L2, L3, L4, L5) are pushed out of the display area (14, 16) and an additional multimedia element (C1) allocated to the activated list element (L1) is pushed into the display area when the first swiping movement of the actuating object (24) takes place at least over a minimum distance S on the touch-sensitive surface (15, 17).

4. Method according to Claim 3, wherein the first swiping movement is carried out downward on the touch-sensitive surface (15, 17).

5. Method according to one of the preceding claims, the additional multimedia element (C1) can be activated by a contact with the actuating object (24) and by a second swiping movement of the actuating object (24), a further additional multimedia element allocated to the activated list element (L1) can be displayed or the list view can be returned to.

6. Method according to Claim 5, wherein the further additional graphical element is displayed by a second swiping movement in the direction of the first swiping movement.

7. Method according to Claim 5, wherein the list view is returned to by a second swiping movement in the opposite direction to the first swiping movement.

8. Method according to one of the preceding claims, wherein the activation of the list element (L1) is displayed by a changed representation of the list element (L1) .

9. Method according to Claim 9, wherein each list element (L1, L2, L3, L4, L5) consists of a plurality of part-segments (L1.1, L1.2, L2.1, L2.2, L3.1, L3.2, L4.1, L4.2, L5.1, L5.2) and the activation of the list element (L1) is displayed by a changed representation of at least one of the part-segments (L1.1, L1.2).

10. Method according to Claim 9, wherein one of the part-segments (L1.1, L2.1, L3.1, L4.1, L5.1) corresponds to a smaller representation of the additional multimedia elements (C1, C2, C3, C4, C5) allocated to the list elements (L1, L2, L3, L4, L5), wherein the part-segments (L2.1, L3.1, L4.1, L5.1) of the non-activated list elements (L2, L3, L4, L5) are displayed only partially and the part-segment (L1.1) of the activated list element (L1) is displayed completely.

11. Method according to one of the preceding claims, wherein additional operating elements (26, 27, 28, 29) are displayed to which buttons, activatable by the actuating elements, on the touch-sensitive surface (15, 17) are allocated.

12. Method according to Claim 11, wherein the operating elements (26, 27, 28, 29) are displayed above the list elements (L1, L2, L3, L4, L5).

13. Method according to Claim 11, wherein the operating elements (26, 27, 28, 29) are displayed below the additional multimedia element (C1).

14. Device for displaying information and for operating an electronic device in a vehicle comprising
- a display device with a display area (14, 16),
- a touch-sensitive surface (15, 17) which is formed on the display area (14, 16), and
- a control device (18) which is coupled to the display device and the touch-sensitive surface (15, 17), on the one hand, and the electronic device in the vehicle (12) to be operated, on the other hand, wherein the control device (18) is designed for performing the method according to one of Claims 1 to 13.

15. Device according to Claim 14, wherein the electronic device to be operated is an infotainment system (12) of a vehicle, wherein the device is preferably an integrated part of the infotainment system (12) of the vehicle or a mobile device (13) communicating with the infotainment system (12) of the vehicle, in particular a mobile telephone, a smartphone or PDA.

## Revendications

1. Procédé selon lequel, pour afficher des informations et pour faire fonctionner un appareil électronique (12) dans un véhicule (11)
- plusieurs éléments de liste (L1, L2, L3, L4, L5) sont affichés sur une surface d'affichage (14, 16) munie d'une surface tactile (15, 17),
- un toucher d'un élément de liste (L1) sur la surface tactile (15, 17) par un objet d'actionnement (24) ou une approche de l'élément de liste (L1) par un objet d'actionnement (24) est détecté, après quoi l'élément de liste (L1) est activé, et
- après l'activation de l'élément de liste (L1), un premier mouvement de balayage de l'objet d'actionnement (24) sur la surface tactile (15, 17) ou à proximité de celle-ci est détecté, et
- conjointement avec ou après la détection du premier mouvement de balayage de l'objet d'actionnement (24), au moins les éléments de liste (L2, L3, L4, L5) non activés sont glissés hors de la surface d'affichage (14, 16) et un élément supplémentaire (C1) multimédia associé à l'élément de liste (L1) activé est glissé dans la surface d'affichage.

2. Procédé selon la revendication 1, l'élément de liste (L1) étant activé lorsque l'élément d'actionnement (24) touche l'élément de liste (L1) ou se trouve à hauteur de l'élément de liste (L1) à proximité immédiate au-dessus de la surface d'affichage (14, 16) au moins pendant une première période T1.

3. Procédé selon l'une des revendications 1 ou 2, au moins les éléments de liste (L2, L3, L4, L5) non activés étant glissés hors de la surface d'affichage (14, 16) et un élément supplémentaire (C1) multimédia associé à l'élément de liste (L1) activé étant glissé dans la surface d'affichage lorsque le premier mouvement de balayage de l'objet d'actionnement (24) est effectué au moins sur un trajet minimal S sur la surface tactile (15, 17).

4. Procédé selon la revendication 3, le premier mouvement de balayage s'effectuant vers le bas sur la surface tactile (15, 17).

5. Procédé selon l'une des revendications précédentes, l'élément supplémentaire (C1) multimédia pouvant être activé par un toucher de l'objet d'actionnement (24) et un deuxième mouvement de balayage de l'objet d'actionnement (24) pouvant afficher un autre élément supplémentaire multimédia associé à l'élément de liste (L1) activé ou pouvant ramener à la représentation de la liste.

6. Procédé selon la revendication 5, l'affichage de l'autre élément supplémentaire graphique s'effectuant par un deuxième mouvement de balayage dans la direction du premier mouvement de balayage.

7. Procédé selon la revendication 5, le retour à la représentation de la liste s'effectuant par un deuxième mouvement de balayage dans la direction inverse du premier mouvement de balayage.

8. Procédé selon l'une des revendications précédentes, l'activation de l'élément de liste (L1) étant affichée par une représentation modifiée de l'élément de liste (L1).

9. Procédé selon la revendication 9, chaque élément de liste (L1, L2, L3, L4, L5) se composant de plusieurs segments partiels (L1.1, L1.2, L2.1, L2.2, L3.1, L3.2, L4.1, L4.2, L5.1, L5.2) et l'activation de l'élément de liste (L1) étant affichée par une représentation modifiée d'au moins l'un des segments partiels (L1.1, L1.2).

10. Procédé selon la revendication 9, l'un des segments partiels (L1.1, L2.1, L3.1, L4.1, L5.1) correspondant à une représentation réduite en taille des éléments supplémentaires (C1, C2, C3, C4, C5) multimédias associés aux éléments de liste (L1, L2, L3, L4, L5), les segments partiels (L2.1, L3.1, L4.1, L5.1) des éléments de liste (L2, L3, L4, L5) non activés n'étant affichés que partiellement et le segment partiel (L1.1) de l'élément de liste (L1) activé étant affiché entièrement.

11. Procédé selon l'une des revendications précédentes, des éléments de commande (26, 27, 28, 29) supplémentaires étant affichés, auxquels sont associés des boutons sur la surface tactile (15, 17) qui peuvent être activés par les éléments d'actionnement.

12. Procédé selon la revendication 11, les éléments de commande (26, 27, 28, 29) étant affichés au-dessus des éléments de liste (L1, L2, L3, L4, L5).

13. Procédé selon la revendication 11, les éléments de commande (26, 27, 28, 29) étant affichés au-dessous de l'élément supplémentaire (C1) multimédia.

14. Dispositif pour afficher des informations et pour faire fonctionner un appareil électronique dans un véhicule, comprenant
- un dispositif d'affichage pourvu d'une surface d'affichage (14, 16),
- une surface tactile (15, 17) qui est représentée sur la surface d'affichage (14, 16), et
- un dispositif de commande (18) qui est couplé d'un côté avec le dispositif d'affichage et la surface tactile (15, 17) et de l'autre côté avec l'appareil électronique à faire fonctionner dans le véhicule (12), le dispositif de commande (18) étant conçu pour mettre en oeuvre le procédé selon l'une des revendications 1 à 13.

15. Dispositif selon la revendication 14, l'appareil électronique à faire fonctionner étant un système d'infodivertissement (12) d'un véhicule, le dispositif étant de préférence une partie intégrée du système d'infodivertissement (12) du véhicule ou un appareil mobile (13), notamment un téléphone mobile, un Smartphone ou un PDA qui communique avec le système d'infodivertissement (12) du véhicule.
